# EUROPÄISCHE PATENTSCHRIFT

(11) **EP 1 902 931 B1**
(45) Veröffentlichungstag und Bekanntmachung des Hinweises auf die Patenterteilung: **29.12.2010**
(21) Anmeldenummer: 07018583.0
(22) Anmeldetag: 21.09.2007
(51) Int. Cl.: B62D 25/20

(54) **Karossiemodul für einen Kraftwagen sowie dessen Befestigungsanordnung**
Bodywork module for a motor vehicle and its mounting system
Module de carrosserie pour un véhicule automobile ainsi que son dispositif de fixation

(30) Priorität: 22.09.2006 DE 102006044799
(43) Veröffentlichungstag der Anmeldung: 26.03.2008
(73) Patentinhaber: AUDI AG, 85045 Ingolstadt (DE)
(72) Erfinder: Schneidewind, Thomas, 52076 Aachen (DE); Crnogorac, Roland, 71336 Waiblingen (DE)
(74) Vertreter: Patzelt, Heike Anna Maria

(56) Entgegenhaltungen:
- EP-A- 1 439 111
- DE-A1- 10 260 913

## Beschreibung

Die Erfindung betrifft ein Karosseriemodul für einen Kraftwagen, insbesondere einen Personenkraftwagen, sowie eine Befestigungsanordnung eines solchen Karosseriemoduls an angrenzenden Trägerprofilen einer Karosserie eines Personenkraftwagens der in den Oberbegriffen der Patentansprüche 1 bzw. 9 angegebenen Art.

Ein solches Karosseriemodul bzw. dessen Befestigungsanordnung an angrenzenden Trägerprofilen einer Karosserie eines Personenkraftwagens ist bereits aus der WO 03/070543 A1 als bekannt zu entnehmen, bei welcher ein Chassis der Kraftwagenkarosserie modular aufgebaut ist. Dabei ist ein Karosseriemodul in Form eines Bodens vorgesehen, welcher eine Mehrzahl von in Fahrzeuglängsrichtung und Fahrzeugquerrichtung verlaufende Trägerprofile umfasst, welche mit einer Mehrzahl von Flächenelementen in Form von Bodenblechen verbunden sind. Die Trägerenden der Querträger sind dabei in zugehörige Aufnahmeöffnungen von an das Karosseriemodul angrenzenden Seitenschwellern einsteckbar, um eine besonders vorteilhafte Anbindung des Bodens zu erreichen. Darüber hinaus umfassen Längsträger einer Vorbau- und einer Heckstruktur des Chassis seitlich abkragende Enden, welche ebenfalls in jeweils zugehörige Aufnahmeöffnungen an den vorderen bzw. den hinteren Enden der Seitenschweller einsteckbar sind.

Aufgabe der vorliegenden Erfindung ist es, ein Karosseriemodul sowie eine Befestigungsanordnung der eingangs genannten Art so zu verbessern, dass das Karosseriemodul auf einfachere und zuverlässigere Weise mit den angrenzenden Trägerprofilen der Karosserie des Kraftwagens zu verbinden ist.

Diese Aufgabe wird erfindungsgemäß durch ein Karosseriemodul und eine Befestigungsanordnung mit den Merkmalen der Patentansprüche 1 bzw. 9 gelöst. Vorteilhafte Ausgestaltungen mit zweckmäßigen und nicht-trivialen Weiterbildungen der Erfindung sind in den jeweils übrigen Patentansprüchen angegeben.

Damit das Karosseriemodul auf einfachere und zuverlässigere Weise an den angrenzenden weiteren Trägerprofilen der Kraftwagenkarosserie festzulegen ist, ist es erfindungsgemäß vorgesehen, dass die Trägerenden separaten Riegelelementen zugeordnet sind, welche verschiebbar am zugehörigen Trägerprofil gehalten sind und durch Verschieben gegenüber dem zugehörigen Trägerprofil in die jeweilige Aufnahmeöffnung des an das Karosseriemodul angrenzenden weiteren Trägerprofils einzustecken sind. Mit anderen Worten ist es also erfindungsgemäß vorgesehen, das Karosseriemodul über Riegelelemente an den angrenzenden weiteren Trägerprofilen der Kraftwagenkarosserie dadurch festzulegen, dass deren Trägerenden in die jeweils korrespondierenden Aufnahmeöffnungen eingeschoben werden. Hierzu sind die jeweiligen Riegelelemente nach Art eines Riegels eines Türschlosses verschiebbar am Karosseriemodul bzw. an deren jeweiligen Trägerprofilen gehalten.

Hierdurch ist es auf einfache Weise möglich, das Karosseriemodul beispielsweise in eine fensterartige Öffnung einzusetzen, wobei sich die Riegelelemente während dieses Einsetzvorgangs in ihrer eingeschobenen Stellung befinden. Nachdem das Karosseriemodul innerhalb der fensterartigen Öffnung bzw. in der gewünschten Stellung gegenüber den angrenzenden Trägerprofilen positioniert ist, können die Riegelelemente ausgeschoben werden, wodurch das Karosseriemodul an den angrenzenden Trägerprofilen der Kraftwagenkarosserie festgelegt ist. Hierdurch lässt sich eine einfache Montage des Karosseriemoduls beispielsweise innerhalb einer fensterartigen Öffnung gewährleisten, da der durch die jeweiligen Riegelelemente erzeugte Hinterschnitt bzw. Formschluss erst dadurch erreicht wird, dass diese nach der exakten Positionierung des Karosseriemoduls entsprechend ausgeschoben werden.

Durch den sich somit erst im Laufe der Montage des Karosseriemoduls ergebenden Formschluss zwischen den ausgeschobenen Riegelelementen und den jeweils zugehörigen Aufnahmeöffnungen auf Seiten der angrenzenden Trägerprofile kann eine einfache Montage bzw. Befestigungsanordnung des Karosseriemoduls an angrenzenden Bauteilen der Kraftwagenkarosserie erreicht werden, bei welcher dieses beispielsweise in eine fensterartige Öffnung eingesetzt werden kann. Da sich der Formschluss der Riegelelemente mit den jeweiligen Aufnahmeöffnungen erst während der Montage ergibt, können die Riegelelemente beispielsweise beim Einsetzen des Karosseriemoduls in eine fensterartige Öffnung auch an gegenüberliegenden Seiten oder umlaufend vorgesehen werden, ohne dass der Formschluss der Riegelelemente mit den Aufnahmeöffnungen das Einsetzen des Karosseriemoduls verunmöglichen würde. Vielmehr ist dies gerade möglich, da der Formschluss erst nach dem Einsetzen des Karosseriemoduls erreicht wird.

Ein weiterer Vorteil des erfindungsgemäßen Karosseriemoduls bzw. von dessen Befestigungsanordnung ist es, dass durch die Riegelelemente an den Stoßstellen zwischen dem Karosseriemodul und den angrenzenden weiteren Trägerprofilen der Kraftwagenkarosserie eine Aufdopplung bzw. Materialverstärkung erreicht wird, so dass die Stoßstellen zusätzlich ausgesteift sind. Dies ist beispielsweise insbesondere dann von Vorteil, wenn die Trägerprofile des Karosseriemoduls stumpf auf die angrenzenden Trägerprofile der Kraftwagenkarosserie stoßen. In diesem Fall gewährleisten die jeweiligen Riegelelemente eine Aussteifung der Stoßstelle.

In weiterer Ausgestaltung der Erfindung hat sich eine besonders einfache Verschiebeführung der Riegelelemente dadurch realisieren lassen, dass diese innerhalb des zugehörigen Trägerprofils des Karosseriemoduls verschiebbar aufgenommen sind. Dies hat den Vorteil, dass kein zusätzlicher Aufnahmeraum für die Riegelelemente vorgesehen werden muss, sondern dass vielmehr der ohnehin vorhandene Hohlquerschnitt des jeweiligen Trägerprofils zur Aufnahme des Riegelelements genutzt werden kann. Dabei hat es sich als zudem vorteilhaft gezeigt, wenn die Außenkontur der jeweiligen Riegelelemente an den Hohlquerschnitt des zugehörigen Trägerprofils angepasst ist. Somit ist eine einfache Schiebeführung dadurch geschaffen, dass die Riegelelemente formgenau innerhalb des zugehörigen Trägerprofils zu verschieben sind.

Um das Karosseriemodul auf einfache Weise an den angrenzenden Trägerprofilen der Kraftwagenkarosserie festlegen zu können, hat es sich in weiterer Ausgestaltung der Erfindung als vorteilhaft gezeigt, wenn die Riegelelemente nach dem Einschieben in die zugehörige Aufnahmeöffnung zu blockieren sind. Diese Blockierung kann in einfachster Ausführung dadurch erfolgen, dass eine Fügverbindung - insbesondere eine Klebverbindung - zwischen dem Riegelelement und der zugehörigen Aufnahmeöffnung bzw. dem zugehörigen Trägerprofil vorgenommen wird. In einer anderen Ausführungsform ist es alternativ oder in Kombination mit den Fügverbindungen möglich, die Blockierung der Verschiebebewegung des jeweiligen Riegelelements mittels eines Blockierstücks vorzunehmen. Dieses Blocklerstück ist auf einfache Weise an derjenigen Stelle zu positionieren, die vor dem Verschieben des Riegelelements durch dieses eingenommen worden ist. Hierdurch wird eine Rückverschiebung bzw. eine Entriegelung des Riegelelements von der Aufnahmeöffnung auf einfache Weise verhindert. Das Blockierstück kann dabei als nachträglich am Karosseriemodul anbringbares Trägerprofil oder dergleichen oder aber als innerhalb eines zugeordneten Trägerprofils verschiebbares weiteres Riegelelement ausgebildet sein. Im Falle der nachträglichen Anbringung kann das Blockierstück auf einfache Weise an der Stelle positioniert werden, die vor dem Verschieben des Riegelelements durch dieses eingenommen wird. Ist das Blockierstück hingegen selbst als Riegelelement ausgebildet, so kann dieses in seine Blockierstellung gebracht werden, sobald das zugehörige Riegelelement in seine Aufnahmeöffnung auf Seiten des angrenzenden Trägerprofils eingeschoben worden ist. Eine weiter vorteilhafte Ausgestaltung sieht vor, dass das Blockierstück zwischen zwei in die zugehörigen Aufnahmeöffnungen eingesteckten Riegelelementen anzuordnen ist. Somit wirkt das Blocklerstück als eine Art Strebe, welche die Riegefelemente an vorzugsweise entgegengesetzten Seiten des Karosseriemoduls in ihren Aufnahmeöffnungen blockiert.

Bei der erfindungsgemäßen Befestigungsanordnung des Karosseriemoduls an angrenzenden Trägerprofilen gelten die bereits beschriebenen Vorteile ebenso. Dabei hat sich die erfindungsgemäße Befestigungsanordnung insbesondere auch dann als besonders vorteilhaft gezeigt, wenn das Karosseriemodul bzw. deren Flächenelemente und/oder Trägerprofile aus einem andersartigen Material - beispielsweise einem Kunststoff - hergestellt sind als die angrenzenden Trägerprofile der Karosserie des Kraftwagens.

Dabei hat es sich weiterhin als vorteilhaft gezeigt, wenn die Riegelelemente formschlüssig in die zugeordneten Aufnahmeöffnungen einzustecken sind. Hierdurch wird eine besonders vorteilhafte mittragende Verbindung der Riegelelemente mit den zugehörigen Aufnahmeöffnungen erreicht.

Eine besonders vorteilhafte Verbindung der Trägerprofile des Karosseriemoduls mit demjenigen der angrenzenden Karosserie lässt sich in weiterer Ausgestaltung der Erfindung dadurch realisieren, dass die jeweiligen Riegelelemente in Einsteckrichtung des an das Karosseriemodul angrenzenden zugehörigen entsprechenden Trägerprofils eingesteckt sind, wobei die jeweiligen Aufnahmeöffnungen durch den entsprechenden Hohlquerschnitt des angrenzenden zugehörigen Trägerprofils gebildet sind. Mit anderen Worten lässt sich eine besonders vorteilhafte Ausgestaltung dadurch realisieren, dass jeweils ein Trägerprofil des Karosseriemoduls und ein zugehöriges Trägerprofil der angrenzenden Karosserie zueinander fluchtend angeordnet sind, wobei das Riegelelement dann in den Bereich der Stoßstelle zwischen den beiden Trägerteilen zu schieben ist. Hierbei wird insbesondere erreicht, dass die beispielsweise stumpf aufeinander gestoßenen beiden Trägerprofile im Bereich ihrer Stoßstelle entsprechend gedoppelt sind. Durch die Dopplung kann somit auch eine sichere Gewährleistung eines Kraftpfades entlang der beiden hintereinander angeordneten Trägerprofile gewährleistet werden, ohne dass diese im Bereich ihrer Stoßstelle abknicken könnten.

In einer alternativen Ausführungsform sind die jeweiligen Riegelelemente quer zur Erstreckungsrichtung des an das Karosseriemodul angrenzenden zugehörigen Trägerprofils in die jeweiligen Aufnahmeöffnungen eingesteckt. Hierdurch ist es beispielsweise möglich, eine äußerst steife Verbindung des beispielsweise senkrecht auf das angrenzende Trägerprofil stoßende modulseitige Trägerprofil zu erreichen. Durch die formschlüssige Verbindung mittels des Riegelelements wird dabei erreicht, dass die Stoßverbindung zwischen dem modulseitigen Trägerprofil und dem benachtbarten Trägerprofil auch mit einer erheblichen Schubkraft belastet werden kann.

In weiterer Ausgestaltung der Erfindung ist es alternativ möglich, die karosserieseitigen Aufnahmeöffnungen für die Riegelelemente dadurch zu bilden, dass separate Aufnahmen an den angrenzenden Trägerprofilen befestigt sind. Hierdurch wird eine besonders stabile Festlegung der Riegelelemente innerhalb der Aufnahmen ermöglicht.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

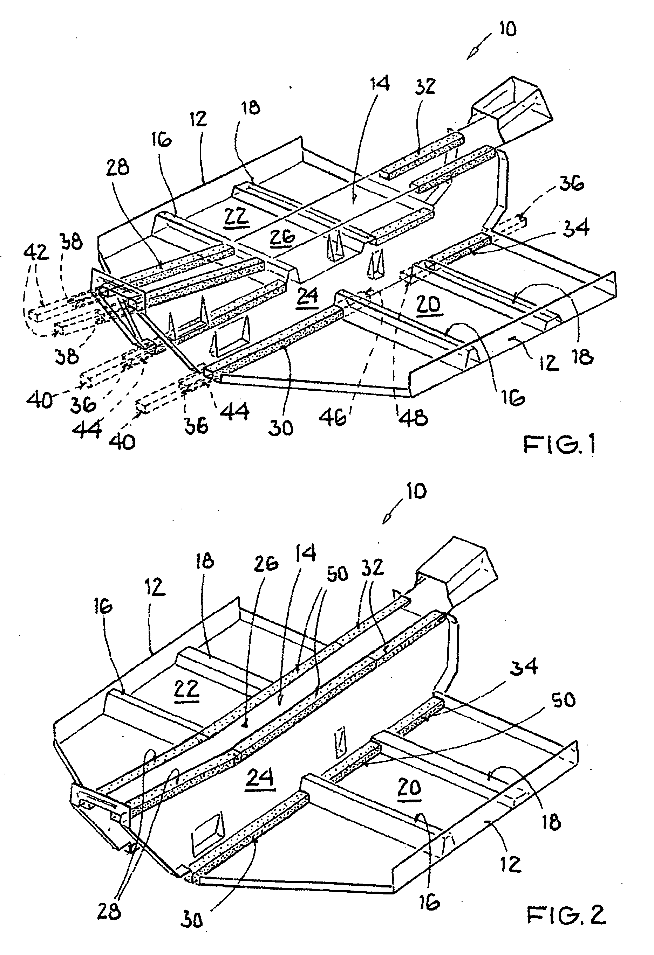

- Fig. 1: eine schematische Perspektivansicht auf ein als Boden eines Per- sonenkraftwagens ausgebildetes, sich bis an nicht gezeigte Sei- tenschweller erstreckendes und einen Mitteltunnel umfassendes Karosseriemodul, welches eine Mehrzahl von in Fahrzeuglängs- richtung und in Fahrzeugquerrichtung verlaufenden Trägerprofilen umfasst, welche mit Flächenelementen in Form von Blechab- schnitten verbunden sind, wobei innerhalb der im Bereich der Mit- teltunnel vorgesehenen Trägerprofile jeweils zugehörige Riegel- elemente verschiebbar aufgenommen sind, welche in jeweils zu- gehörige Aufnahmeöffnungen von gestrichelt angedeuteten an- grenzenden Trägerprofilen einzustecken sind;
- Fig. 2: eine weitere schematische Perspektivansicht auf das Karosserie- modul gemäß Fig. 1, wobei die ausgeschobenen bzw. in die zu- gehörigen Aufnahmeöffnungen der nicht dargestellten Trägerprofi- le eingesteckten Riegelelemente durch nachträglich aufgesetzte Blockierstücke in Form von Trägerprofilen blockiert bzw. gesichert sind;

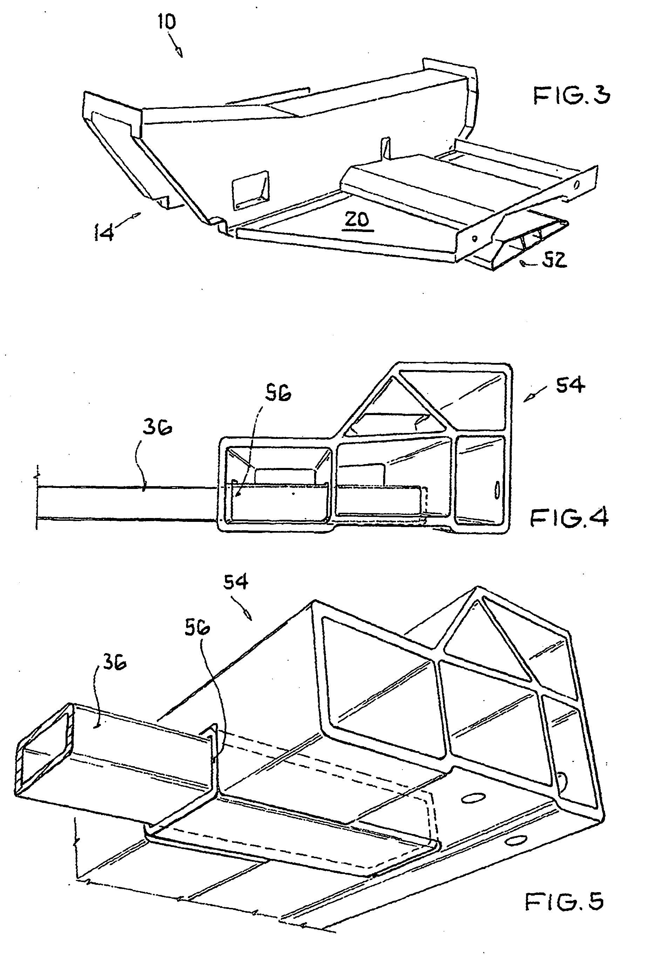

- Fig. 3: eine weitere schematische Perspektivansicht auf das Karosserie- modul nach einer alternativen Ausführungsform, bei weicher ein Sitzquerträger als Blockierstück dient, mit welchem jeweilige, in- nerhalb der zugehörigen Trägerprofile verschiebbare Riegelele- mente in ihrer ausgeschobenen bzw. in die jeweiligen Aufnahme- öffnungen eingesteckten Stellung zu sichern sind;
- Fig. 4: eine schematische Schnittansicht durch ein an das Karosseriemo- dul angrenzendes Trägerprofil der Kraftwagenkarosserie, welches eine Aufnahme in Form eines Hohlprofils umfasst, in welche ein Riegelelement des Karosseriemoduls in Querrichtung zu dem an- grenzenden Trägerprofil eingeschoben ist; und in
- Fig. 5: eine perspektivische Unteransicht der Befestigungsanordnung des Riegelelements innerhalb der Aufnahmeöffnung der zugehörigen hohl profilierten Aufnahme, welche ihrerseits innerhalb einer ent- sprechend geformten, quer zur Erstreckungsrichtung des angren- zenden Trägerprofils verlaufenden Aufnahme befestigt ist.

In Fig. 1 ist in einer schematischen Perspektivansicht ein Karosseriemodul in Form eines Bodens 10 einer Karosserie eines Personenkraftwagens dargestellt, welcher sich nach außen hin bis an nicht gezeigte Seitenschweller der Karosserie erstreckt. Dabei umfasst der Boden 10 zwei in Fahrzeuglängsrichtung verlaufende außenseitige Schmalwände 12, mit welchen dieser an den jeweiligen Seitenschweller angrenzt. Weiterhin umfasst der Boden 10 einen Mitteltunnel 14, welcher sich über dessen gesamte Länge in Fahrzeuglängsrichtung erstreckt. Zwischen dem Mitteltunnel 14 und der jeweiligen Schmalwand 12 erstrecken sich jeweils zwei als Querträger ausgebildete Trägerprofile 16,18, welche mit jeweiligen Flächenelementen 20, 22 in Form von Bodenblechen des Karosseriemoduls verbunden sind. Anstelle von Bodenblechen wäre es natürlich auch denkbar, sowohl die Trägerprofile 16, 18 wie auch die Flächenelemente 20, 22 aus Kunststoff zu gestalten. Neben den Flächenelementen 20, 22 sind weitere Flächenelemente 24, 26 vorgesehen, welche die Seitenwände bzw. die obere Deckseite des Mitteltunnels 14 bilden.

Am vorderen und hinteren Ende des Mitteltunnels 14 sind jeweils vier als Längsträger ausgebildete Trägerprofile 28, 30, 32, 34 vorgesehen, welche mit den jeweiligen Flächenelementen 20, 22, 24, 26 verbunden sind. Die Trägerprofile 28, 30, 32, 34 sind vorliegend als im Wesentlichen kastenförmige und hohl profilierte Strangpressprofile gestaltet. Gleichfalls wäre es natürlich auch denkbar, die Trägerprofile 28, 30, 32, 34 aus Kunststoff oder in Blechschalenbauweise herzustellen.

Der vorliegende Boden 10 ist dazu vorgesehen, in eine entsprechende Ausnehmung bzw. fensterartige Öffnung der Karosserie bzw. des Chassis des Personenkraftwagens eingesetzt zu werden. Demzufolge ist der Boden 10 als großformatiges Karosseriemodul ausgebildet, welches vorgefertigt ist und seitlich neben den Seitenschwellern bzw. nach vorne hin hinter einer vorderen Stirnwand und nach hinten hin vor einer hinteren Heckwand eingesetzt werden kann. Damit das Karosseriemodul auf einfache und stabile Weise mit den angrenzenden Trägerprofilen der Kraftwagenkarosserie - beispielsweise den Seitenschwellern oder Trägerprofilen der Vorbau- und Eckstruktur des Personenkraftwagens - verbunden werden kann, sind im Weiteren noch näher erläuterte Riegelelemente 36, 38 vorgesehen, welche auf im Weiteren noch näher beschriebene Weise an den angrenzenden Trägerprofilen festgelegt werden können.

Von einer angrenzenden Vorbaustruktur sind in Fig. 1 lediglich beispielhaft vier Trägerprofile 40, 42 gestrichelt angedeutet, welche in einer Erstreckungsrichtung bzw. Flucht mit den jeweils zugehörigen Trägerprofilen 28, 30 des Bodens 10 angeordnet sind. Die angrenzenden Trägerprofile 40, 42 können beispielsweise Teilträger der vorderen Längsträger sein, welche sich gabelförmig zum Mitteltunnel 14 bzw. zum jeweiligen Seitenschweller hin aufteilen, Die Trägerprofile 40, 42 sind dabei vorliegend ebenfalls hohl profiliert und beispielsweise in einem Strangpressverfahren hergestellt.

Weiterhin ist aus Fig. 1 erkennbar, dass die innerhalb der in Fahrzeuglängsrichtung verlaufenden Trägerprofile 28, 30, 32, 34 angeordneten Riegelelemente 36, 38 als leistenförmige Teile mit rechteckförmigem Querschnitt ausgebildet sind, welche verschiebbar innerhalb des zugehörigen Trägerprofils 28, 30, 32, 34 aufgenommen sind. Die Riegelelemente 36, 38 sind dabei vorliegend als im Wesentlichen kastenförmige und hohl profilierte Strangpressprofile gestaltet, welche aus einen entsprechenden Halbzeug hergestellt werden können. Die Außenkontur der Riegelelemente 36, 38 ist dabei an den Hohlquerschnitt des jeweils zugehörigen Trägerprofils 28, 30, 32, 34 angepasst.

Nachdem der Boden 10 in die umgebende Karosserie bzw. das Chassis eingesetzt worden ist, können demzufolge die Riegelelemente 36, 38 in Fahrzeuglängsrichtung nach vorne bzw. nach hinten aus den zugehörigen Trägerprofilen 28, 30, 32, 34 ausgeschoben bzw. in entsprechende Aufnahmeöffnungen 44 der angrenzenden Trägerprofile 40, 42 eingeschoben werden. Im vorliegenden Ausführungsbeispiel werden demzufolge die Aufnahmeöffnungen 44 durch den entsprechenden Hohlquerschnitt des angrenzenden Trägerprofils 40, 42 gebildet. Dabei sind im vorliegenden Ausführungsbeispiel die Trägerprofile 40, 42 mit einem identischen Hohlquerschnitt wie die modulseitigen Trägerprofile 28, 30 ausgestattet, so dass sich eine formschlüssige Verbindung der Riegelelemente 36 auch mit den Trägerprofilen 40, 42 ergibt. Dabei ist aus Fig. 1 ersichtlich, dass die Stoßstelle der jeweils in Erstreckungsrichtung zueinander verlaufenden Trägerprofile 28 und 40 bzw. 30 und 42 durch die jeweiligen Riegelelemente 36 aufgedoppelt wird. Somit sind die stumpf gegeneinander gestoßenen Trägerprofile 28 und 40 bzw. 30 und 42 zusätzlich versteift, so dass entlang der jeweiligen Trägerprofile 28, 30 und 40, 42 verlaufende Kraftpfade auf sichere und zuverlässige Weise bereitgestellt werden können, da ein Abknicken oder Versagen der Verbindungen zwischen den Trägerprofilen 28, 30 und den jeweiligen Trägerprofilen 40, 42 nicht befürchtet werden braucht.

Im vorliegenden Ausführungsbeispiel können die Riegelelemente 30 durch eine Fügverbindung - insbesondere eine Klebverbindung - in ihrer in die Aufnahmeöffnungen 44 der Trägerprofile 40, 42 eingesteckten verriegelten Stellung festgelegt werden. Die Fügverbindung kann dabei sowohl zwischen den Riegelelementen 36 und den Trägerprofilen 28, 30 wie auch den jeweils zugeordneten Trägerprofilen 40, 42 vorgesehen sein.

Anhand der in Fig. 1 vordersten bzw. untersten beiden Trägerprofilen 30, 34 ist erkennbar, dass die zugehörigen Riegelelemente 36, 38 etwas länger ausgebildet sind als das jeweils zugehörige Trägerprofil 30, 34. Ist demzufolge das jeweilige Riegelelement 36, 38 noch in seiner eingeschobenen, also nicht innerhalb der jeweiligen Aufnahmeöffnung 44 eingesteckten Position, so stehen diese mit jeweiligen inneren Enden 46, 48 im mittleren Bereich des Bodens 10 gegenüber dem zugehörigen Trägerprofil 30, 34 heraus. Werden die Riegelelemente 36, 38 im Anschluss daran in die zugehörigen Aufnahmeöffnungen eingeschoben, so werden die Enden 46, 48 zur jeweiligen Auβenseite des Bodens 10 hinbewegt. Dadurch kann in den durch die beiden Enden 46, 48 freigegebenen Bauraum nachträglich ein in Fig. 2 erkennbares Blockierstück 50 in Form eines Rahmenlängsträgers eingesetzt werden, welcher eine Rückwärtsverschiebung der Riegelelemente 36, 38 verhindert.

Dabei ist in Fig. 2 in einer schematischen Perspektivansicht der Boden 10 gemäß Fig. 1 dargestellt, wobei zusätzlich alle vier Blockierstücke 50 zwischen den jeweiligen Enden der die zugehörigen Riegelelemente 36, 38.aufnehmenden Trägerprofilen 28, 30, 32, 34 nachträglich eingesetzt worden sind, nachdem die Riegelelemente 36, 38 in ihre Aufnahmeöffnungen 44 verschoben worden sind. Somit ist aus Fig. 2 insbesondere erkennbar, dass jeweils zwei einander zugeordnete Riegelelemente 36, 38 dadurch innerhalb ihrer jeweiligen Aufnahmeöffnung 44 gesichert sind, dass das zugehörige Blockierstück 50 zwischen den beiden zugehörigen Riegelelementen 36, 38 eingepasst worden ist. Neben der bereits beschriebenen Fügverbindung ist somit eine zusätzliche Sicherung geschaffen, die ein Zurückverschieben der Rlegelelemente 36, 38 aus den zugehörigen Aufnahmeöffnungen 44 innerhalb der angrenzenden Trägerprofile 40, 42 verhindert.

In Fig. 3 ist in einer schematischen Perspektivansicht der Boden 10 nach einer weiteren Ausführungsform dargestellt. Dabei kann alternativ zu den in Fig. 2 dargestellten Blockierstücken ein Blockierstück 52 in Form eines Sitzquerträgers eingesetzt werden, welcher vorliegend eine entsprechende Breite aufweist und aus einem mehrkammerigen Strangpressprofil gestaltet ist. Sobald die Riegelelemente 36, 38 in ihrer jeweiligen Aufnahmeöffnung 44 eingesteckt worden sind und demzufolge deren zur Mitte hin gewandten Enden 46, 48 (Fig. 1) den nötigen Raum freigegeben haben, kann der Sitzquerträger 52 entsprechend eingesetzt werden. Dabei wäre es auch denkbar, den Sitzquerträger 52 selbst als Riegelelement auszubilden bzw. diesen mit einem innenseitigen Riegelelement zu versehen, durch welche die Riegelelemente 36, 38 der jeweils zugehörigen Trägerprofile 30, 34 blockiert werden können.

Schließlich ist in den Fig. 4 und 5 in einer schematischen Schnittansicht bzw. einer perspektivischen Unteransicht eines der angrenzenden Trägerprofile 54, welches vorliegend als Seitenschweller ausgebildet ist, gezeigt. Das Trägerprofil 54 besteht vorliegend aus mehreren Kammern und ist beispielsweise in einem Strangpressverfahren hergestellt. Quer zur Erstreckungsrichtung des Trägerprofils 54 ist an dessen Unterseite eine sich über die annähernd gesamte Breite des Trägerprofils 54 erstreckende quaderförmige Ausnehmung eingebracht, in welche eine etwa formgleiche Aufnahme 56 eingesetzt ist. Die Aufnahme 56 ist vorliegend als Hohlprofil mit rechteckförmigem Hohlquerschnitt ausgebildet und beispielsweise über eine Fügverbindung am Trägerprofil 54 festgelegt. In die Aufnahmeöffnung 44 der Aufnahme 56 ist vorliegend ein Riegelelement 36 eingeschoben, welches beispielsweise aus einem der in Fahrzeugquerrichtung verlaufenden Trägerprofile 16, 18 ausgeschoben wird. Dabei ist erkennbar, dass das Riegelelement 36 an den Hohlquerschnitt der Aufnahme 56 angepasst und über die gesamte Länge der Aufnahme 56 in diese eingeschoben ist. Hierdurch wird eine Festlegung des Bodens 16 auch in Fahrzeugquerrichtung erreicht. Alternativ zu der vorliegend gezeigten Ausführungsform kann die Aufnahmeöffnung 44 auch unmittelbar in die Seitenwand des Trägerprofils 54 eingebracht werden, so dass das Riegelelement 36 quer zur Erstreckungsrichtung des angrenzenden Trägerprofils 54 in dessen Aufnahmeöffnung 44 eingesteckt ist.

## Patentansprüche

1. Karosseriemodul für einen Kraftwagen, insbesondere einen Personenkraftwagen, mit einer Mehrzahl von miteinander verbundenen Flächenelementen (20, 22, 24, 26) und Trägerprofilen (28, 30, 32, 34), deren Trägerenden in Aufnahmeöffnungen (44) von an das Karosseriemodul (10) angrenzenden weiteren Trägerprofilen (40, 42) einzustecken sind,
**dadurch gekennzeichnet, dass**
die Trägerenden separaten Riegelelementen (36, 38) zugeordnet sind, welche verschiebbar am zugehörigen Trägerprofil (28, 30, 32, 34) gehalten sind und durch Verschieben gegenüber dem zugehörigen Trägerprofil (40, 42) in die jeweilige Aufnahmeöffnung (44) des entsprechenden an das Karosseriemodul (10) angrenzenden weiteren Trägerprofils (40, 42; 54) einzustecken sind.

2. Karosseriemodul nach Anspruch 1,
**dadurch gekennzeichnet, dass**
die Riegelelemente (36, 38) verschiebbar innerhalb des zugehörigen Trägerprofils (28, 30, 32, 34) aufgenommen sind.

3. Karosseriemodul nach Anspruch 2,
**dadurch gekennzeichnet, dass**
das die Außenkontur der Riegelelemente (36, 38) an den Hohlquerschnitt des zugehörigen Trägerprofils (28, 30, 32, 34) angepasst ist.

4. Karosseriemodul nach einem der Ansprüche 1 bis 3,
**dadurch gekennzeichnet, dass**
die Verschiebebewegung des jeweiligen Riegelelements (36, 38) nach dem Einstecken in die zugehörige Aufnahmeöffnung (44) zu blockieren ist.

5. Karosseriemodul nach Anspruch 4,
**dadurch gekennzeichnet, dass**
die Blockierung der Verschiebebewegung des jeweiligen Riegelelements (36, 38) mittels eines Blockierstück (50, 52) erfolgt.

6. Karosseriemodul nach Anspruch 5,
**dadurch gekennzeichnet, dass**
als Blockierstück (50, 52) ein nachträglich am Karosseriemodul ( 10) anbringbares Trägerprofil oder ein innerhalb eines zugeordneten Trägerprofils verschiebbares weiteres Riegelelement dient.

7. Karosseriemodul nach Anspruch 5 oder 6,
**dadurch gekennzeichnet, dass**
das Blockerstück (50, 52) zwischen zwei in die zugehörigen Aufnahmeöffnungen (44) eingesteckten Riegelelementen (36, 38) anzuordnen ist.

8. Karosseriemodul nach einem der Ansprüche 1 bis 7,
**dadurch gekennzeichnet, dass**
dieses als Boden (10) eines Personenkraftwagens ausgebildet ist, welcher in eine Aufnahmeöffnung eines Chassis einzusetzen ist.

9. Befestigungsanordnung eines Karosseriemoduls (10) an angrenzenden Trägerprofilen (40, 42; 54) einer Karosserie eines Personenkraftwagens, bei welcher das Karosseriemodul (10) mit einer Mehrzahl von miteinander verbundenen Flächenelementen (20, 22, 24, 26) und Trägerprofilen (28, 30, 32, 34) umfasst, deren Trägerenden in Aufnahmeöffnungen (40) der angrenzenden weiteren Trägerprofilen (40, 42; 54) einzustecken sind,
**dadurch gekennzeichnet, dass**
die Trägerenden separaten Riegelelementen (36, 38) zugeordnet sind, welche verschiebbar am zugehörigen Trägerprofil (28, 30, 32, 34) gehalten sind und durch Verschieben gegenüber dem zugehörigen Trägerprofil (28, 30, 32, 34) in die jeweilige Aufnahmeöffnung (44) des an das Karosseriemodul (10) angrenzenden weiteren Trägerprofilen (40, 42; 54) einzustecken sind, wobei die Riegelelemente (36, 38) in ihrer in die jeweilige Aufnahmeöffnung (44) eingesteckten Stellung gesichert sind.

10. Befestigungsanordnung nach Anspruch 9,
**dadurch gekennzeichnet, dass**
die Riegelelemente (36, 38) in ihrer in die jeweiligen Aufnahmeöffnung (44) eingesteckten Stellung über eine Fügverbindung gesichert sind.

11. Befestigungsanordnung nach Anspruch 9 oder 10,
**dadurch gekennzeichnet, dass**
die Riegelelemente (36, 38) formschlüssig in die zugeordneten Aufnahmeöffnungen (44) einzustecken sind.

12. Befestigungsanordnung nach einem der Ansprüche 9 bis 11,
**dadurch gekennzeichnet, dass**
das jeweilige Riegelelement (36, 38) in Erstreckungsrichtung des an das Karosseriemodul (10) angrenzenden zugehörigen Trägerprofils (40, 42) eingesteckt ist, wobei die jeweilige Aufnahmeöffnung (44) durch den entsprechenden Hohlquerschnitt des angrenzenden zugehörigen Trägerprofils (40, 42) gebildet ist.

13. Befestigungsanordnung nach einem der Ansprüche 9 bis 11,
**dadurch gekennzeichnet, dass**
das jeweilige Riegelelement (36) quer zur Erstreckungsrichtung des an das Karosseriemodul (10) angrenzenden zugehörigen Trägerprofils (54) in dessen Aufnahmeöffnung (44) eingesteckt ist.

14. Befestigungsanordnung nach Anspruch 13,
**dadurch gekennzeichnet, dass**
das die jeweiligen Aufnahmeöffnungen (44) durch separate Aufnahmen (56) gebildet sind, welche am angrenzenden zugehörigen Trägerprofil (54) befestigt sind.

## Claims

1. Bodywork module for a motor vehicle, in particular a passenger vehicle, with a plurality of interconnected surface elements (20, 22, 24, 26) and support profiles (28, 30, 32, 34), the support ends of which are to be inserted into receiving openings (44) of further support profiles (40, 42) adjacent to the bodywork module (10), **characterized in that** the support ends are assigned to separate crossbar elements (36, 38) which are held displaceably on the associated support profile (28, 30, 32, 34) and, by displacement in relation to the associated support profile (40, 42), are to be inserted into the respective receiving opening (44) in the corresponding, further support profile (40, 42; 54) adjacent to the bodywork module (10).

2. Bodywork module according to Claim 1, **characterized in that** the crossbar elements (36, 38) are held displaceably within the associated support profile (28, 30, 32, 34).

3. Bodywork module according to Claim 2, **characterized in that** the outer contour of the crossbar elements (36, 38) is matched to the hollow cross section of the associated support profile (28, 30, 32, 34) .

4. Bodywork module according to one of Claims 1 to 3, **characterized in that** the displacement movement of the respective crossbar element (36, 38) is to be blocked after the latter has been inserted into the associated receiving opening (44).

5. Bodywork module according to Claim 4, **characterized in that** the displacement movement of the respective crossbar element (36, 38) is blocked by means of a blocking component (50, 52).

6. Bodywork module according to Claim 5, **characterized in that** a support profile which can be fitted retrospectively on the bodywork module (10) or a further crossbar element which is displaceable within an associated support profile serves as the blocking component (50, 52).

7. Bodywork module according to Claim 5 or 6, **characterized in that** the blocking component (50, 52) is to be arranged between two crossbar elements (36, 38) inserted into the associated receiving openings (44).

8. Bodywork module according to one of Claims 1 to 7, **characterized in that** the latter is designed as a passenger vehicle floor (10) which is to be inserted into a receiving opening of a chassis.

9. Mounting system of a bodywork module (10) on adjacent support profiles (40, 42; 54) in a passenger vehicle bodywork, in which the bodywork module (10) comprises a plurality of interconnected surface elements (20, 22, 24, 26) and support profiles (28, 30, 32, 34), the support ends of which are to be inserted into receiving openings (40) of the adjacent further support profiles (40, 42; 54), **characterized in that** the support ends are assigned to separate crossbar elements (36, 38) which are held displaceably on the associated support profile (28, 30, 32, 34) and, by means of displacement in relation to the associated support profile (28, 30, 32, 34), are to be inserted into the respective receiving opening (44) of the further support profile (40, 42; 54) adjacent to the bodywork module (10), the crossbar elements (36, 38) being secured in their position inserted into the respective receiving opening (44).

10. Mounting system according to Claim 9, **characterized in that** the crossbar elements (36, 38) are secured in their position inserted into the respective receiving opening (44) via a joint connection.

11. Mounting system according to Claim 9 or 10, **characterized in that** the crossbar elements (36, 38) are to be inserted into the associated receiving openings (44) in an interlocking manner.

12. Mounting system according to one of Claims 9 to 11, **characterized in that** the respective crossbar element (36, 38) is inserted in the direction of extent of the associated support profile (40, 42) adjacent to the bodywork module (10), the respective receiving opening (44) being formed by the corresponding hollow cross section of the adjacent associated support profile (40, 42).

13. Mounting system according to one of Claims 9 to 11, **characterized in that** the respective crossbar element (36) is inserted into the receiving opening (44) of the associated support profile (54) transversely with respect to the direction of extent of said support profile adjacent to the bodywork module (10).

14. Mounting system according to Claim 13, **characterized in that** the respective receiving openings (44) are formed by separate receptacles (56) mounted on the adjacent associated support profile (54).

## Revendications

1. Module de carrosserie pour un véhicule automobile, notamment une voiture de tourisme, comprenant une pluralité d'éléments de surface (20, 22, 24, 26) et de profilés de support (28, 30, 32, 34) connectés les uns aux autres, dont les extrémités de support doivent être enfichées dans des ouvertures de réception (44) de profilés de support supplémentaires (40, 42) adjacents au module de carrosserie (10),
**caractérisé en ce que**
les extrémités de support sont associées à des éléments de verrouillage séparés (36, 38) qui sont maintenus de manière déplaçable sur le profilé de support associé (28, 30, 32, 34) et qui doivent être enfichés par déplacement par rapport au profilé de support associé (40, 42) dans l'ouverture de réception respective (44) du profilé de support supplémentaire correspondant (40, 42 ; 54) adjacent au module de carrosserie (10).

2. Module de carrosserie selon la revendication 1,
**caractérisé en ce que**
les éléments de verrouillage (36, 38) sont reçus de manière déplaçable à l'intérieur du profilé de support associé (28, 30, 32, 34).

3. Module de carrosserie selon la revendication 2,
**caractérisé en ce que**
le contour extérieur des éléments de verrouillage (36, 38) est adapté à la section transversale creuse du profilé de support associé (28, 30, 32, 34).

4. Module de carrosserie selon l'une quelconque des revendications 1 à 3,
**caractérisé en ce que**
le mouvement de déplacement de l'élément de verrouillage respectif (36, 38) doit être bloqué après l'enfichage dans l'ouverture de réception associée (44).

5. Module de carrosserie selon la revendication 4,
**caractérisé en ce que**
le blocage du mouvement de déplacement de l'élément de verrouillage respectif (36, 38) s'effectue au moyen d'une pièce de blocage (50, 52).

6. Module de carrosserie selon la revendication 5,
**caractérisé en ce que**
l'on utilise en tant que pièce de blocage (50, 52) un profilé de support pouvant être monté ultérieurement sur le module de carrosserie (10) ou un élément de verrouillage supplémentaire déplaçable à l'intérieur d'un profilé de support associé.

7. Module de carrosserie selon la revendication 5 ou 6,
**caractérisé en ce que**
la pièce de blocage (50, 52) doit être disposée entre deux éléments de verrouillage (36, 38) enfichés dans les ouvertures de réception associées (44).

8. Module de carrosserie selon l'une quelconque des revendications 1 à 7,
**caractérisé en ce que**
celui-ci est réalisé sous forme de fond (10) d'une voiture de tourisme, qui doit être inséré dans une ouverture de réception d'un châssis.

9. Agencement de fixation d'un module de carrosserie (10) sur des profilés de support adjacents (40, 42 ; 54) d'une carrosserie d'une voiture de tourisme, dans lequel le module de carrosserie (10) comprend une pluralité d'éléments de surface (20, 22, 24, 26) et de profilés de support (28, 30, 32, 34) connectés les uns aux autres, dont les extrémités de support doivent être enfichées dans des ouvertures de réception (44) des profilés de support supplémentaires (40, 42 ; 54) adjacents,
**caractérisé en ce que**
les extrémités de support sont associées à des éléments de verrouillage séparés (36, 38) qui sont maintenus de manière déplaçable sur le profilé de support associé (28, 30, 32, 34) et qui doivent être enfichés par déplacement par rapport au profil de support associé (28, 30, 32, 34) dans l'ouverture de réception respective (44) du profilé de support supplémentaire (40, 42 ; 54) au module de carrosserie (10), les éléments de verrouillage (36, 38) étant fixés dans leur position enfichée dans l'ouverture de réception respective (44).

10. Agencement de fixation selon la revendication 9,
**caractérisé en ce que**
les éléments de verrouillage (36, 38) sont fixés dans leur position enfichée dans l'ouverture de réception respective (44) par le biais d'une connexion d'assemblage.

11. Agencement de fixation selon la revendication 9 ou 10, **caractérisé en ce que**
les éléments de verrouillage (36, 38) doivent être enfichés par engagement positif dans les ouvertures de réception associées (44).

12. Agencement de fixation selon l'une quelconque des revendications 9 à 11,
**caractérisé en ce que**
l'élément de verrouillage respectif (36, 38) est enfiché dans la direction d'étendue du profilé de support (40, 42) associé adjacent au module de carrosserie (10), l'ouverture de réception respective (44) étant formée par la section transversale creuse correspondante du profilé de support associé adjacent (40, 42).

13. Agencement de fixation selon l'une quelconque des revendications 9 à 11,
**caractérisé en ce que**
l'élément de verrouillage respectif (36) est enfiché transversalement à la direction d'étendue du profilé de support associé (54) adjacent au module de carrosserie (10) dans son ouverture de réception (44).

14. Agencement de fixation selon la revendication 13,
**caractérisé en ce que**
les ouvertures de réception respectives (44) sont formées par des logements séparés (56), qui sont fixés sur le profilé de support associé adjacent (54).
